# EUROPÄISCHE PATENTSCHRIFT

(11) **EP 1 317 649 B1**
(45) Veröffentlichungstag und Bekanntmachung des Hinweises auf die Patenterteilung: **28.12.2005**
(21) Anmeldenummer: 01982262.6
(22) Anmeldetag: 07.09.2001
(51) Int. Cl.: F28G 3/16, F28G 15/02, F16C 11/06

(54) **KUGELGELENK-LAGERUNG FÜR EINE WASSERLANZE EINES WASSERLANZENBLÄSERS**
BALL JOINT BEARING FOR A WATER LANCE OF A WATER LANCE BLOWER
LOGEMENT A JOINT SPHERIQUE POUR LANCE A EAU DE SOUFFLEUR A LANCE A EAU

(30) Priorität: 11.09.2000 DE 10044799
(43) Veröffentlichungstag der Anmeldung: 11.06.2003
(73) Patentinhaber: Clyde Bergemann GmbH, 46485 Wesel (DE)
(72) Erfinder: BARTELS, Franz, 46499 Hamminkeln (DE); EIMER, Klaus, 40883 Ratingen (DE); SIMON, Stephan, 46499 Hamminkeln (DE)
(74) Vertreter: Kahlhöfer, Hermann
(86) Internationale Anmeldenummer: PCT/EP2001/010328
(87) Internationale Veröffentlichungsnummer: WO 2002/021064

(56) Entgegenhaltungen:
- DD-A- 276 908
- DE-A- 2 261 382
- US-A- 1 599 283
- US-A- 1 807 457
- US-A- 2 972 502
- US-A- 3 604 088

## Beschreibung

Die vorliegende Erfindung bezieht sich auf ein Lagersystem für eine Wasserlanze eines Wasserlanzenbläsers mit einem Kugelgelenk, das eine Kugel sowie einen Kugelsitz umfaßt, wobei die Kugel einen Durchgang hat, an und/oder in dem die Wasserlanze anordenbar ist Weiterhin betrifft die vorliegende Erfindung ein Verfahren zum Betrieb dieses Lagersystems.

Wasserlanzenbläser werden insbesondere zur Reinigung von Wärmeanlagen eingesetzt. Wasserlanzenbläser dieser Art sind beispielsweise in der WO 96/38701, der WO 96/38702, der WO 96/38703 und der WO 96/38704 beschrieben. Die Wasserlanzenbläser geben dabei einen gebündelten Wasserstrahl durch den Feuerraum auf die gegenüberliegende Wand ab. Infolge der kinetischen Wasserstrahlenergie und des schlagartigen Verdampfens von in Poren der Ablagerungen eingedrungenem Wasser wird ein Abplatzen der Verschmutzungen aus Ruß, Schlacke und Asche bewirkt.

Die Wasserlanzenbläser weisen dazu eine Wasserlanze auf, die mit ihrer Mündung an oder in einer Luke der Wärmeanlage schwenkbar angeordnet ist. Der Auftreffbereich des vom Wasserlanzenbläser erzeugten Wasserstrahls folgt im allgemeinen einem bestimmten vorgebbaren Weg auf der zu reinigenden Fläche, auch Blasfigur genannt. Dieser Weg verläuft vorzugsweise mäanderförmig und spart gegebenenfalls Hindernisse, Öffnungen oder andere empfindliche Zonen aus. Die Bewegung der Wasserlanze wird mit einem Antriebssystem realisiert, wobei insbesondere Sensoren zur Überwachung der Bewegungsabläufe der Wasserlanze integriert sind. Ein besonders kompaktes Antriebssystem für einen Wasserlanzenbläser ist beispielsweise aus der nachveröffentlichten DE 100 09 818 bekannt. Zusätzlich können derartige Wasserlanzenbläser mit Überwachungseinrichtungen ausgeführt sein, welche die Qualität des erzeugten Wasserstrahls erfassen. Eine derartige Überwachungseinrichtung ist in der nachveröffentlichten DE 100 09 831 beschrieben.

Für eine präzise Steuerung der Bewegungsabläufe der Wasserlanze ist eine geeignete, schwenkbare Lagerung der Wasserlanze erforderlich. Aus der WO 93/12398 ist eine Lagerung für eine Wasserlanze bekannt, wobei die Wasserlanze nahe ihrer Mündung mit einem Segment eines Kardangelenkes verbunden ist. Das Kardangelenk ist in der Wand der Wärmeanlage angeordnet. Aufgrund des Kardangelenkes ist die Luke bzw. Öffnung in der Wand der Wärmeanlage nicht vollständig geschlossen. Derartige Wärmeanlagen werden vorzugsweise mit Überdruck betrieben, wobei Rauch, Asche und Abgase durch die Luke bzw. das Gelenk nach außen gelangen. Dies ist unerwünscht, da diese heißen Produkte des Verbrennungsprozesses die Lebensdauer des Wasserlanzenbläsers verkürzen oder das Betriebspersonal gefährden können.

Aus der DD 145 476 ist weiterhin bekannt, die Wasserlanze in einem Kugelgelenk zu lagern. Dabei sind sowohl einseitig wirkende als auch zweiseitig wirkende Lagerungen beschrieben. Ist das Kugellager nur für die Aufnahme von axialen Kräften in einer Richtung geeignet (einseitiges Lager), muß die Wasserlanze permanent in die Lagerung gedrückt werden. Zu diesem Zweck ist die Wasserlanze über Federn mit der Wärmeanlage verbunden. Eine solche Lagerung kann aufgrund von Druckschwankungen im Inneren der Wärmeanlage zu unerwünschten Bewegungsabläufen der Wasserlanze führen. Das in der DD 145 476 beschriebene zweiseitige Kugellager erfordert eine horizontale Teilung der Kugellagerführung, um das Gelenk einsetzen zu können, wodurch Montage und Instandhaltung erschwert werden. Weiterhin können die Gleitflächen des Kugelgelenkes durch eintretende Verschmutzungen verschließen und die Lebensdauer des Kugellagers reduzieren.

Eine weitere Lagerung einer Wasserlanze ist in der DD 276 908 A beschrieben. Die Wasserlanze ist dabei mit einem Kühl- und/oder Blasmittel beaufschlagten Rohr versehen. Das Rohr ist über Durchtrittsöffnungen mit im Kugelgelenk ein gebrachten Durchgangsöffnungen verbunden und in einem zwischen Kugelgelenksegment sowie Kugelgelenkführung angeordneten, zum Austritt des Rohres hin offenen, Luftkammerspalt eingebunden. Die Integration des Kühlsystems für das Kugelgelenk in die Wasserlanze selbst hat zur Folge, daß die Wasserlanze mehrere getrennte Zuleitungen mit unterschiedlchen Medien aufweisen muß. Dabei wird der Aufbau der Wasserlanze sehr komplex. Dies hat eine Erhöhung des Gewichtes der Wasserlanze zur Folge, wodurch das Bewegungsverhalten verschlechtert wird. Zusätzlich ist eine horizontale Teilung der Kugelgelenkführung erforderlich, um das Kugelgelenk einzusetzen bzw. auszutauschen.

Weiterhin ist in der DD 276 908 A ein Verfahren zum Kühlen eines Kugelgelenkes sowie der Wasserlanze beschrieben, wobei Kühlluft über einen Ringkanal einerseits zur Mündung der Wasserlanze sowie andererseits in einen Luftkammerspalt zwischen Kugelgelenksegment und Kugelgelenkführung strömt.

Aus der US 1,599,283 geht ein verschließbarer Einführstutzen für eine Reinigungsdüse hervor, welche zur Reinigung von Warmetauscherrohren eingesetzt wird. Zum Hindurchführen der Reinigungsdüse weist der Einführstutzen einen Verschluss sowie einen rohrformigen Abschnitt mit einer Auswölbung auf Der Einführstutzen ist über die Auswölbung in einem zwei Ringe aufweisenden Lager in der Wand der Wärmeanlage fixiert.

Eine weitere Vorrichtung zur Reinigung von Wärmeaustauschflächen geht auch aus der US 2,972,502 hervor. Dabei wird mittels eines Hubzylinders eine Schwenkbewegung einer in einer Wärmeanlage fixierten Wasserlanze durchgeführt. Die Mündung der Wasserlanze steckt in einer Kugel, die mittels einer durch den Hubzylinder erzeugten Anpresskraft in eine Öffnung der Wand der Wärmeanlage hineingedrückt wird. Zur Abdichtung der Öffnung weist das Gehäuse der Luke einen teilweise umlaufenden Kanal auf, über den ein Luftstrom auf den Kontaktbereich von Kugel und Öffnung gerichtet ist.

Davon ausgehend, ist die Aufgabe der vorliegenden Erfindung, ein Lagersystem für eine Wasserlanze eines Wasserlanzenbläsers anzugeben, welches einfach aufgebaut und leicht montierbar ist und das eine präzise Bewegung der Wasserlanze gewährleistet. Weiterhin soll ein Verfahren zum Betrieb eines Lagersystems angegeben werden, welches eine Verunreinigung im Lagerspalt zumindest deutlich verringert.

Diese Aufgaben werden gelöst durch ein Lagersystem für eine Wasserlanze eines Wasserlanzenbläsers gemäß dem Anspruch 1 bzw. ein Verfahren zu dessen Betrieb gemäß dem Anspruch 17. Vorteilhafte Ausführungsformen und Ausgestaltungen sind in den jeweils abhängigen Ansprüchen angegeben.

Das erfindungsgemäße Lagersystem mit einem Kugelgelenk umfaßt eine Kugel sowie einen Kugelstiz, wobei die Kugel einen Durchgang hat, an und/oder in dem die Wasserlanze fixierbar ist. Der Kugelsitz umfaßt zwei voneinander axial beabstandete Lagerschalen mit je einer Öffnung, wobei die Kugel zumindest teilweise in die Öffnungen hineinragt. Die Lagerschalen sind dabei so ausgerichtet, daß diese axiale Kräfte in beiden Richtungen aufnehmen können. Die Kugel ist somit axial fixiert, wobei eine Rotation der Kugel in den Öffnungen der Lagerschalen gewährleistet ist. Die Unterscheidung der Anordnung der Wasserlanze bezieht sich darauf, ob sich die Wasserlanze zumindest teilweise in den Durchgang erstreckt und direkt mit diesem verbunden ist, oder ob die Wasserlanze nur mittelbar an dem Durchgang angeordnet ist. Eine solche mittelbare Anordnung ist insbesondere dann gegeben, wenn die Wasserlanze mit zusätzlichen Bauteilen in dem Durchgang fixiert ist. Diese können beispielsweise adaptive oder abdichtende Funktionen haben.

Eine derartige Ausgestaltung eines Lagersystems hat den Vorteil, daß zur Auswechslung, Instandhaltung oder Überprüfung des Kugelgelenks lediglich eine (leicht zugängliche) Lagerschale entfernt werden muß. Da die Lagerschalen voneinander beabstandet sind, ist eine anwendungsspezifische Aufnahme von axialen Kräften möglich, wobei die Reibleistung und somit auch die bei Rotation entstehende Wärme reduziert wird. Treten beispielsweise hohe axiale Kräfte auf, weist der Kugelsitz kleinere Öffnungen auf, wodurch die axiale Fixierung des Kugelgelenkes stabiler ausgeführt ist. Eine Vergrößerung der Anlagefläche von der Kugel und dem erfindungsgemäßen Kugelsitz kann trotzdem vermieden werden, indem beispielsweise der Abstand zwischen den Lagerschalen vergrößert wird.

Zusätzlich ist mit den Lagerschalen ein um die Kugel umlaufender Ringspalt begrenzt, in den ein Luftstrom einleitbar ist. Die Lagerschalen weisen demzufolge keine Unterbrechungen auf, so daß ein Ringspalt durch die zwei beabstandeten Lagerschalen sowie der anliegenden Kugel gebildet ist. Bei idealer Lagerung kann somit ein in den Ringspalt eingeleiteter Luftstrom nicht zwischen den Lagerschalen und der Kugel entweichen, sondern erzengt einen erhöhten Druck in dem Ringspalt. Kommt es aufgrund besonderer dynamischer Belastungen dazu, daß die sphärische Anlagefläche der Lagerschale von der Oberfläche der Kugel abhebt, kann der Luftstrom an diesen Stellen entweichen und somit das Eindringen von Verunreinigungen in die Lagerung verhindern. Außerdem ist dieser Luftstrom zumindest teilweise zur Kühlung der Wasserlanze einsetzbar.

Gemäß einer weiteren Ausgestaltung weist die Kugel mindestens einen, vorzugsweise radial verlaufenden, Kanal aufweist, der sich von der Oberfläche zu dem Durchgang hin erstreckt. Ein derartiger Kanal ist insbesondere dafür geeignet, einen Luftstrom, der in den Ringspalt eingeleitet wird, in das Innere der Kugel weiterzuleiten. Auf diese Weise kann eine im und/oder am Durchgang befestigte Wasserlanze gekühlt werden. Die Versorgung mit einem Luftstrom sollte dabei so gestaltet sein, daß eine gleichmäßige Kühlung bei beliebiger Position der Wasserlanze gewährleistet ist. Eine auf der Oberfläche der Kugel gleichmäßig verteilte Anzahl von Kanälen, welche radial gebildet sind, erlaubt eine kostengünstige Herstellung und eine gleichmäßige Kühlung.

Besonders vorteilhaft ist es, die Kanäle in einer gemeinsamen Ebene anzuordnen. Die Anordnung von mehreren Kanälen in einer Ebene hat beispielsweise den Vorteil, daß die Kugel zweiteilig herstellbar ist, wobei die einzelnen Kanäle durch Nuten gebildet sind. Dabei ist insbesondere bevorzugt, daß die Kanäle in einer Ebene angeordnet sind, die nicht durch den Mittelpunkt, der Kugel verläuft, sondern senkrecht dazu zur Seite des Feuerraumes hin verschoben ist. Dadurch münden gerade in der Nähe des maximalen Verschwenkbereiches eine geringere Anzahl von Kanälen in die Umgebung. Dennoch ist derart sichergestellt, daß in jeder Stellung der Kugel zumindest ein Kanal den Ringspalt kreuzt. Auf diese Weise ist eine permanente Versorgung des Durchgangs mit Kühlluft gewährleistet.

Gemäß noch einer weiteren Ausgestaltung weist der Durchgang mindestens einer Querschnittserweiterung mit einer vorgebbaren Länge auf, wobei diese mit mindestens einem Kanal, vorzugsweise allen Kanälen, verbunden ist. Die Querschnittserweiterung ist bevorzugt zentral im Inneren der Kugel angeordnet und dient der Verwirbelung bzw. Verteilung des einströmenden Luftstroms. Ist nun beispielsweise die Mündung einer Wasserlanze in dem Durchgang angeordnet, bildet die Querschnittserweiterung einen ringförmigen Hohlraum um die Wasserlanze. Aufgrund der unterschiedlichen Positionen der Kugel erfolgt eine Einletung des Luftstromes jeweils durch eine unterschiedliche Anzahl von Kanälen. Der ringförmige Hohlraum gewährleistet, daß ein gegebenenfalls partiell eingeleiteter Luftstrom verwirbelt und gleichmäßig um die Wasserlanze verteilt wird.

Besonders vorteilhaft ist es, wenn der mindestens eine Kanal ein Ventil aufweist. Ein derartiges Ventil verhindert beispielsweise, daß der eingeleitete Luftstrom in eine äußere Umgebung des Kugelgelenkes und insbesondere in das Äußere der Wärmeanlage abgegeben wird. Auf diese Weise kann die Menge des Kühlluftstroms reduziert werden. Bei Wärmeanlagen, die mit Überdruck arbeiten, kann so verhindert werden, daß während bestimmter Positionen der Kugel Rauch oder andere Verunreinigungen durch die in das Innere der Wärmeanlage gerichtete Kanäle in das Kugelgelenk eindringen.

Gemäß einem weiteren Ausführungsbeispiel weist der Durchgang eine Austrittsöffnung auf, wobei der Durchgang mindestens eine Aufweitung hat, die an die Austrittsöffnung grenzt und eine vorgebbare Tiefe hat. Die Aufweitung ist so gestaltet, daß sie strömungstechnisch mit dem mindestens einen Kanal verbunden ist. Damit ist gemeint, daß gegebenenfalls ein Gas, insbesondere ein Luftstrom, aus dem mindestens einen Kanal zumindest teilweise in die Aufweitung einleitbar ist. Dies hat zur Folge, daß eine in dem Durchgang anordenbare Wasserlanze nicht nur über die Länge der Querschnittserweiterung, sondern bis zur Austrittsöffnung kühlbar ist. Auf diese Weise ist ein Luftstrom vom Ringspalt in das Innere der Kugel über die Kanäle gewährleistet, wobei der Luftstrom anschließend außen an der Mündung einer Wasserlanze vorbeiströmt und bei der Austrittsöffnung in das Innere der Wärmeanlage ausströmt. Weist der Luftstrom einen höheren Druck in dem Kanal, der Querschnittserweiterung oder der Aufweitung auf als in der Wärmeanlage herrscht, wird sowohl eine gleichmäßige Kühlung bewirkt als auch das Innere des Kugelgelenkes vor Verunreinigungen geschützt. Die Aufweitung hat vorzugsweise zusätzlich radial nach innen gerichtete Rippen, welche als eine Art Führung für die Mündung der Wasserlanze dienen. Die Räume zwischen den Rippen gewährleisten dabei die Kühlung.

Besonders vorteilhaft ist die Anordnung der Lagerschalen symmetrisch zu einer Fläche senkrecht zur Achse des Kugelgelenkes. Die Lagerschalen können somit gleich gestaltet sein, wodurch die Herstellung eines solchen Lagersystems vereinfacht wird. Bei der Montage erfolgt dann eine entgegengesetzte Anordnung der Lagerschalen, wodurch der Kugelsitz gebildet wird.

Gemäß einer weiteren Ausgestaltung des Lagersystems weisen die Lagerschalen je eine sphärische Anlagefläche mit einem maximalen und einem minimalen Schalendurchmesser auf, welche zumindest teilweise an der Oberfläche der Kugel anliegen. Unter einer sphärischen Anlagefläche prinzipiell eine dreidimensionale Fläche gemeint, insbesondere konkave oder konvexe Flächen. Aber auch eine konkave oder konvexe Fläche mit Unterbrechungen werden darunter verstanden. Derartige Unterbrechungen können beispielsweise zur Schmierung oder Kühlung der Lagerung verwendet werden, wobei zusätzlich die Reibung reduziert wird.

Die sphärischen Anlageflächen sind dabei bevorzugt so geformt, daß diese das Negativ der Kugeloberfläche darstellen. Besonders vorteilhaft ist es dabei, wenn diese sphärischen Anlageflächen einem bandförmig umlaufenden Abschnitt auf der Oberfläche der Kugel entsprechen. Da die Lagerschalen geeignet sind, axiale Kräfte aufzunehmen, liegt die Kugel von der Seite mit dem maximalen Schalendurchmesser her an. Aufgrund von Fertigungstoleranzen kommt dabei die Anlagefläche zumeist nur teilweise auf der Oberfläche der Kugel zur Anlage, wobei den noch eine sehr gute Führung der Kugel gewährleistet ist.

Gemäß einer weiteren Ausgestaltung des Lagersystems sind die Lagerschalen miteinander verbunden. Auf diese Weise kann die Anordnung der Lagerschalen zueinander exakt fixiert werden, wodurch eine dauerhafte und leichtläufige Führung der Kugel gewährleistet ist.

Besonders vorteilhaft ist es, wenn wenigstens eine Lagerschale mit mindestens einem Federelement so verbunden ist, daß dieses mindestens eine Lagerschale an die Kugel drückt. Dabei kann das Federelement einerseits zwischen den Lagerschalen oder andererseits zwischen einem Befestigungsmittel und der Lagerschale angeordnet sein. Die erste Anordnung ist besonders geeignet, um Dehnungen der Verbindungsmittel zu kompensieren, wie sie beispielsweise aufgrund der hohen Temperaturen nahe einer Wärmeanlage auftreten. In dem anderen Fall wird das mindestens eine Federelement dazu benutzt, eine Kraft in Richtung der anderen Lagerschale zu erzeugen. Auf diese Weise ist auch bei hochdynamischen Bewegungen der Kugel, wie sie beispielsweise durch Druckschwankungen in der Wärmeanlage oder abrupte Bewegungswechsel der Wasserlanze auftreten können, gewährleistet, daß die Kugel an der sphärischen Anlagefläche zumindest einer Lagerschale geführt ist.

Gemäß noch einer weiteren Ausgestaltung des Lagersystems ist die Lagerschale mit einer Halterung, insbesondere aus hitzebeständigem Material, verbunden. Bevorzugt ist die Halterung aus einem hitzebeständigen Stahlwerkstoff. Auf diese Weise ist das erfindungsgemäße Lagersystem besonders einfach mit unterschiedlichen Wärmeanlagen kombinierbar, wobei die Halterung gegebenenfalls Zuleitungen für externe Systeme (sensorbasiertes Überwachungssystem, Kühlmittelzufuhr, Sperrluftzufuhr, Schmiermittelzufuhr etc.) aufweist.

Gemäß einer vorteilhaften Weiterbildung der Erfindung hat die Kugel einen Durchmesser von 110 bis 200 mm, insbesondere von 130 mm bis 160 mm. Der Durchmesser der Kugel ist insbesondere auf den Durchmesser des Durchgangs sowie dem vorgebbaren Schwenkbereich der Wasserlanze anzupassen. Ein Durchmesser der Kugel in dem angegebenen Bereich ermöglicht einen kegelförmigen Verschwenkbereich von 45° um die Achse des Kugelgelenks bei einem Durchgangsdurchmesser von ca. 40 mm, wobei ein Verklemmen der Kugel vermieden wird, wie es beispielsweise bei zu gering beabstandeten Lagerschalen auftreten kann.

Gemäß einer weiteren Ausgestaltung ist zumindest eine Teilfläche der Oberfläche der Kugel aus einem keramischen Material, insbesondere Aluminiumoxid. Keramisches Material zeichnet sich durch seine besondere Härte aus. Dies gewährleistet eine hohe Lebensdauer der Lagerung, da Verunreinigungen gegebenenfalls von der Lagerung selbst zermahlen werden. Dabei ist es gegebenenfalls ausreichend, die Teilfäche der Oberfläche der Kugel keramisch zu beschichten, die während des Betriebes an den Lagerschalen zur Anlage kommt.

Besonders vorteilhaft ist es, wenn die Kugel aus keramischem Material, insbesondere aus Keramik-Spritzguß gebildet ist. Die Gestaltung der kompletten Kugel aus keramischem Material hat den Vorteil, daß ein einheitliches thermisches Dehnungsverhalten der Kugel gewährleistet ist. Ist die Kugel durch ein Keramik-Spritzguß-Verfahren hergestellt, ist diese zweigeteilt. Dies hat den Vorteil, daß eine sehr leichte Kugel mit sehr dünnen gleichmäßigen Wandungen gebildet wird. Dabei kann gegebenenfalls auf eine fügetechnische Verbindung der Kugelhälften verzichtet werden, da die Kugel durch die Lagerschalen zusammengehalten wird.

Gemäß noch einer weiteren Ausgestaltung des Lagersystems hat der Durchgang eine Eintrittsöffnung, wobei der Durchgang nahe der Eintrittsöffnung zumindest eine Aussparung aufweist. Diese Aussparung dient insbesondere der Befestigung einer Wasserlanze. Auf diese Weise kann beispielsweise eine form- oder kraftschlüssige Verbindung von Kugel und Wasserlanze realisiert werden. Derartige Verbindungen sind einfach lösbar und für eine Instandhaltung sehr geeignet.

Gemäß noch einem weiteren Ausführungsbeispiel ist in und/oder an dem Durchgang, insbesondere nahe der Eintrittsöffnung, ein Adapter zur Fixierung einer Wasserlanze angeordnet. Der Adapter ermöglicht, daß bereits installierte Wasserlanzenbläser mit dem erfindungsgemäßen Lagersystem kombiniert werden, da somit eine spezifische Düsenform der Wasserlanze bei der Fixierung am Lagersystem nicht notwendig ist. Für eine besonders stabil ausgeführte Fixierung der Wasserlanze erstreckt sich der Adapter bevorzugt in den Durchgang, insbesondere durch den gesamten Durchgang hindurch. Dabei ist es ebenfalls möglich, den Adapter so zu gestalten, daß eine gleichmäßige Kühlung der Wasserlanze bzw. des Adapters durch entsprechende Verengungen des Adapters bewirkt wird.

Gemäß noch einer weiteren Ausgestaltung weist der Durchgang mindestens einen Verschwenkbereich von 45° um die Achse des Kugelgelenkes auf. Der Verschwenkbereich ist dabei ein imaginärer, dreidimensionaler, kegelförmiger Raum, welcher seinen Ursprung im Mittelpunkt der Kugel hat und einen minimalen Öffnungswinkel von 45° aufweist. In diesem Verschwenkbereich ist die Wasserlanze zur Ausführung ihrer präzisen Bewegungsbahnen schwenkbar. Insbesondere bei der Gestaltung der Aufweitung und/oder der Aussparung und/oder dem Adapter ist stets gewährleistet, daß der Verschwenkbereich nicht eingeschränkt ist.

Das erfindungsgemäße Verfahren zum Betrieb eines Lagersystems besteht darin, daß in dem Ringspalt ein gasförmigen Medium, vorzugsweise einem Luftstrom, bereitgestellt wird, dessen Druck der größer als der Umgebungsdruck des Kugelgelenkes ist. Bei unterschiedlichen Umgebungsdrücken innerhalb und außerhalb der Wärmeanlage, ist der Druck im Ringspalt auf den größeren Umgebungsdruck abzustellen. Das den Druck erzeugende gasförmigen Medium ist bevorzugt über eine geeignete Zufuhr im oder am Gehäuse in den Ringspalt einzuleiten. Auf diese Weise wird das Kugelgelenk gegenüber der Umgebung abgedichtet.

Aufgrund von Fertigungstoleranzen bzw. der dynamischen Beanspruchung des Lagers können Spalte zwischen den Anlageflächen der Lagerschalen und der Oberfläche der Kugel entstehen. Bei entsprechendem Druck im Ringspalt strömt das gasförmige Medium, insbesondere Luft, durch diese Spalte in die Umgebung. Somit ist verhindert, daß sich beispielsweise Ruß- oder Aschepartikel zwischen der Anlagefläche der Lagerschale und der Oberfläche der Kugel ansammeln. Das ausgeströmte Medium ist kontinuierlich nachzuführen, um den gewünschten Druck aufrecht zu erhalten.

Gemäß einer weiteren Ausgestaltung des Verfahrens münden zumindest während einer axialen Ausrichtung des Durchganges, insbesondere innerhalb eines Verschwenkbereiches von 20°, alle Kanalöffnungen in den Ringspalt. Der Wasserlanzenbläser wird üblicherweise nur kurzzeitig (wenige Minuten) betrieben, während er einen Großteil in dieser Ruheposition verbringt. Eine axiale bzw. nur gering geneigte Ausrichtung des Durchgangs wird insbesondere während dies Ruheposition einer Wasserlanze verwendet. Da in diesem Zeitraum kein Wasser durch die Wasserlanze strömt, ist die Kühlung der Wasserlanze mit Hilfe des Luftstromes besonders wichtig. Aus diesem Grund ist es vorteilhaft, daß der Luftstrom aus dem Ringkanal gleichmäßig, durch alle Kanäle, eingeleitet wird. Eine leicht nach unten geneigte Wasserlanze hat weiterhin den Vorteil, daß Restwasser oder Verunreinigungen aufgrund der Schwerkraft aus der Wasserlanze austreten.

Gemäß noch einer weiteren Ausgestaltung des Verfahrens mündet bei beliebiger Ausrichtung des Durchgangs mindestens eine Kanalöffnung wenigstens teilweise in den Ringspalt. Mit einer beliebigen Ausrichtung des Durchgangs ist dabei jede Position innerhalb des vorgegebenen Verschwenkbereiches gemeint. Somit ist gewährleistet, daß die in dem Durchgang angeordnete Wasserlanze während des Betriebes des Wasserlanzenbläsers kontinuierlich mit Kühlluft versorgt ist.

Gemäß einer weiteren Ausgestaltung des Verfahrens strömt der Luftstrom durch zumindest eine im Ringspalt angeordnete Kanalöffnung in eine Querschnittserweiterung und zumindest teilweise durch nicht in dem Ringspalt mündende Kanäle und/oder mindestens eine Aufweitung. Über den Ringspalt und die Kanalöffnungen wird der Luftstrom in das Innere der Kugel eingeleitet. Die Querschnittserweiterung bildet mit einer in dem Durchgang angeordneten Wasserlanze einen ringförmigen Hohlraum, in dem der eingeleitete Luftstrom verwirbelt und verteilt wird. Ausgehend von diesem ringförmigen Hohlraum strömt beispielsweise ein Teil des Luftstromes durch die nicht im Ringspalt mündenden Kanäle, wodurch diese gegen Verunreinigungen aus der Umgebung abgedichtet werden. Ein durch die Aufweitung auftretender Luftstrom kühlt die Wasserlanze und unterstützt die Fokussierung des Wasserstrahles.

Weitere Vorteile und besonders bevorzugte Ausgestaltungen des erfindungsgemäßen Lagersystems sowie ein Verfahren zu dessen Betrieb werden anhand der nachfolgenden Zeichnungen beschrieben. Dabei zeigen:
- Fig. 1: einen Wasserlanzenbläser mit einem erfindungsgemäßen Lagersystem,
- Fig. 2: eine Schnittansicht einer Ausführungsform des erfindungsgemäßen Lagersystems,
- Fig. 3: eine perspektivische Teilansicht einer Lagerschale,
- Fig. 4: eine perspektivische und schematische Darstellung einer Kugel für eine Ausführungsform eines erfindungsgemäßen Lagersystems und
- Fig. 5: eine Schnittansicht einer weiteren Ausführungsform des erfindungsgemäßen Lagersystems.

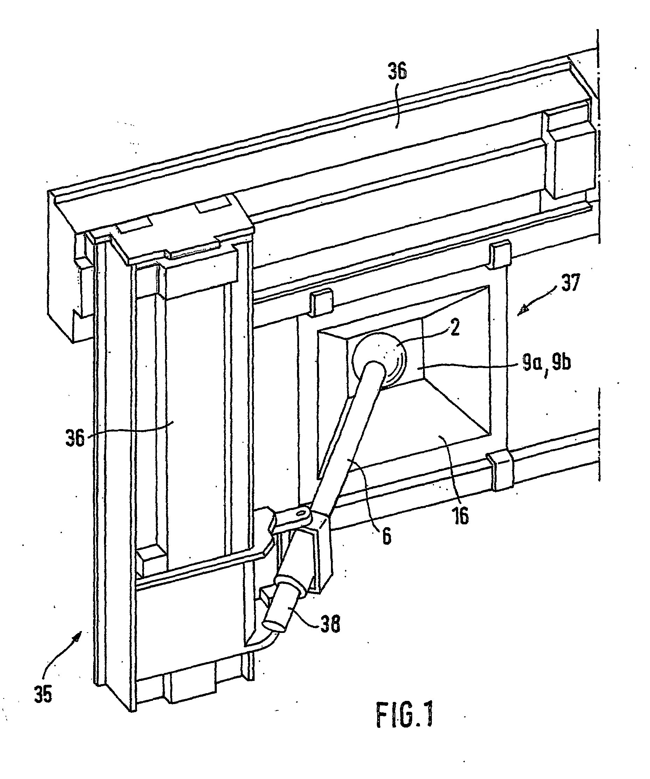

Fig. 1 zeigt schematisch den Aufbau eines Wasserlanzenbläsers 35 mit zwei Antriebseinheiten 36, die eine präzise Bewegung der Wasserlanze 6 entlang vorgebbarer Blasfiguren gewährleisten. Die Wasserlanze 6 ist an ihrem hinteren Ende 38 von einer Antriebseinheit 36 angelenkt und mündet in einer erfindungsgemäßen Kugel 2, die in den Lagerschalen 9a, 9b gelagert und geführt ist. Das Kugelgelenk 1 ist in einem Gehäuse 16 angeordnet, welches in einer Luke 37 einer Wärmeanlage befestigt ist. Der Wasserlanze 6 wird an ihrem hinteren Ende 38 Wasser zugeführt, welches durch die Kugel 2 beispielsweise auf innenliegende Wandbereiche einer Wärmeanlage gespritzt wird.

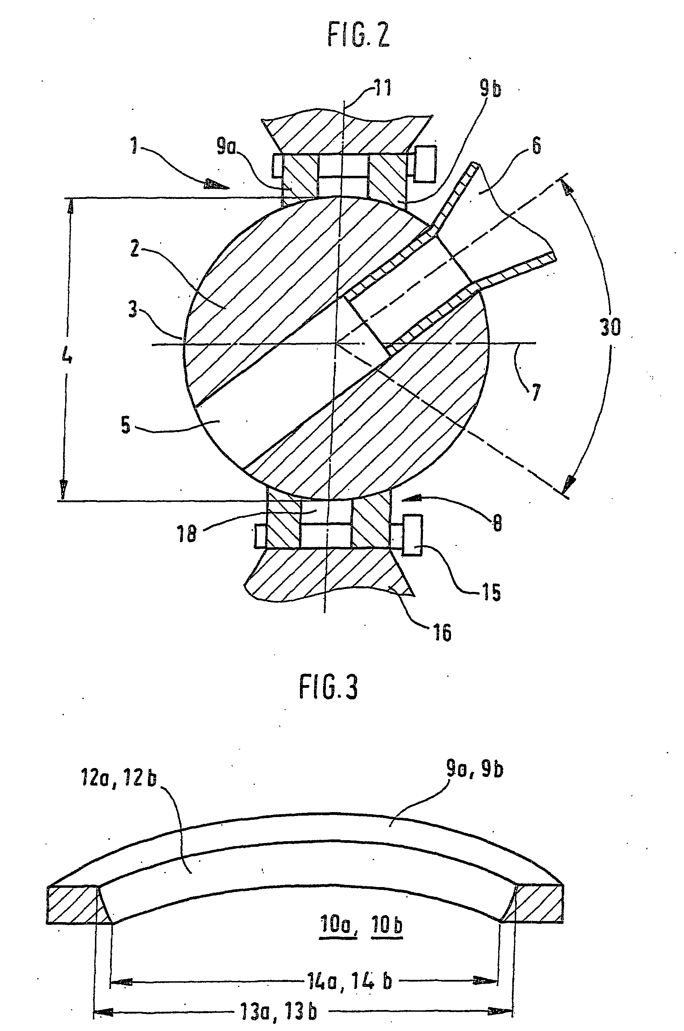

Fig. 2 zeigt eine schematische Schnittansicht eines erfindungsgemäßen Kugelgelenkes 1. Das Kugelgelenk 1 hat eine Achse 7 und umfaßt eine Kugel 2 und einen Kugelsitz 8. Der Kugelsitz 8 umfaßt zwei voneinander axial 7 beabstandete Lagerschalen 9a, 9b mit je einer Öffnung 10a, 10b, wobei die Kugel 2 zumindest teilweise in die Öffnungen 10a, 10b hineinragt. Die Lagerschalen 9a und 9b liegen an der Oberfläche 3 der Kugel 2 an und begrenzen so einen umlaufenden Ringspalt 18. Sie sind durch Federelemente 15 miteinander verbunden und in einem Gehäuse 16 angeordnet. Die Kugel 2 ist weiterhin mit einem Durchgang 5 ausgeführt, in dem eine Wasserlanze 6 angeordnet ist. Der Durchmesser 4 der Wasserlanze 6 ist so gewählt, daß die Wasserlanze 6 innerhalb des Verschwenkbereichs 30 frei bewegbar ist. Die Lagerschalen 9a und 9b sind symmetrisch zu einer Fläche 11 senkrecht zur Achse 7 angeordnet und für eine axiale 7 Aufnahme von Kräften geeignet.

Fig. 3 zeigt schematisch und perspektivisch eine Schnittansicht einer Lagerschale 9a, 9b. Sie weist eine Öffnung 10a, 10b und eine sphärische Anlagefläche 12a, 12b auf. Die Kugel 2 ragt zumindest teilweise durch die Öffnung 10a, 10b und liegt mindestens teilweise an der Anlagefläche 12a, 12b an. Damit die Lagerschale 9a, 9b für eine axiale 7 Kraftaufnahme geeignet ist, weist sie einen maximalen 13a, 13b und einen minimalen Schalendurchmesser 14a, 14b auf.

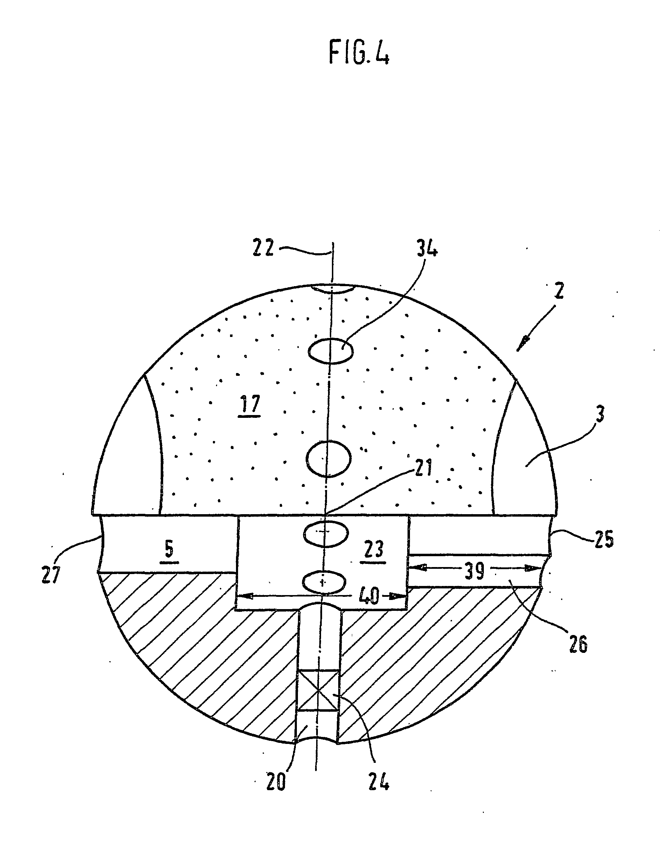

Fig. 4 zeigt eine erfindungsgemäße Kugel 2, wobei im oberen Bereich eine perspektivische Darstellung und im unteren Bereich eine Schnittdarstellung gezeigt ist. Die Oberfläche 3 der Kugel 2 weist eine Teilfläche 17 auf, die mit keramischem Material gebildet ist. Die Ausgestaltung der Teilfläche 17 ist so gewählt, daß die Lagerschale 9a, 9b während jeder Position der Kugel 2 lediglich an der Teilfläche 17 anliegen. Die Kugel 2 weist mehrere Kanäle 20 mit Kanalöffnungen 34 auf, die in einer Ebene 22 durch den Mittelpunkt 21 angeordnet sind. In den Kanälen 20 sind Ventile 24 angeordnet, die ein Ausströmen bzw. Einströmen von Gasen oder Partikeln verhindern. Alle Kanäle 20 münden in einer Querschnittserweiterung 23, welche sich über eine Länge 40 des Durchganges 5 erstreckt. Der Kanal verläuft ebenfalls durch den Mittelpunkt 21 und hat eine Eintrittsöffnung 27 zur Fixierung einer Wasserlanze 6 und eine Austrittsöffnung 25, welche zum Inneren einer Wärmeanlage hin ausgerichtet ist. Der Durchgang 5 weist eine Aufweitung 26 auf, welche an die Oberfläche 3 der Kugel 2 grenzt und eine vorgebbare Tiefe 39 hat. Dargestellt ist eine Ausführungsform, bei der die Tiefe 39 der Aufweitung 26 so gewählt ist, daß diese auch an die Querschnittserweiterung 23 grenzt.

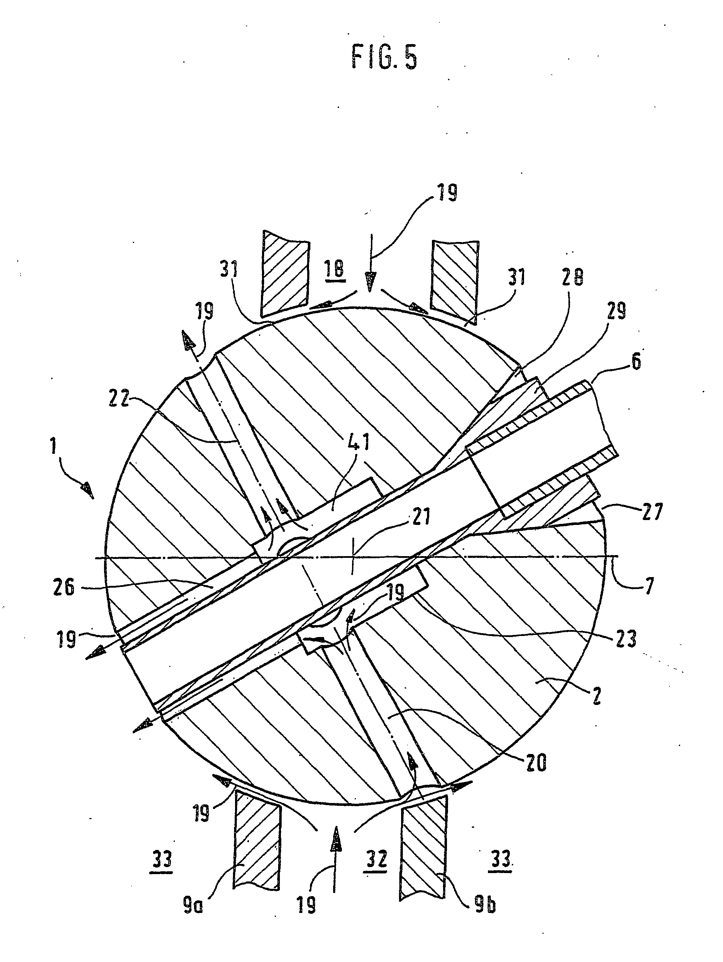

Fig. 5 zeigt eine weitere Ausgestaltung des erfindungsgemäßen Kugelgelenkes 1. Die Kugel 2 wird durch zwei Lagerschalen 9a, 9b geführt, die axial 7 beabstandet angeordnet sind. Die Lagerschalen 9a und 9b begrenzen einen Ringspalt 18, in den ein Luftstrom 19 (Pfeile) einleitbar ist. Auf diese Weise herrscht im Ringspalt 18 ein Druck 32, der größer als der Umgebungsdruck 33 des Kugelgelenkes 1 ist. Treten während des Betriebes des Lagersystems Spalte 31 zwischen den Lagerschalen 9a, 9b und der Kugel 2 auf, so strömt die Luft 19 zumindest teilweise durch diese Spalte 31 und verhindert derart eine Verunreinigung des Lagersystems. Durch in den Ringspalt 18 mündende Kanäle 20 wird der Luftstrom 19 zumindest teilweise in die Querschnittserweiterung 23 des Durchgangs 5 eingeleitet. In dem Durchgang 5 ist ein Adapter 29 zur Aufnahme einer Wasserlanze 6 angeordnet. Der Adapter 29 ist mit einer Aussparung 28 nahe der Eintrittsöffnung 27 des Durchgangs 5 mit der Kugel 2 befestigt und fixiert. Der Adapter 29 erstreckt sich durch den gesamten Durchgang 5 bis zur Austrittsöffnung 25. Auf diese Weise kann ein gleichmäßiger Wasserstrahl realisiert werden. Durch den Adapter 29 und der Querschnittserweiterung 23 wird ein Hohlraum 41 gebildet, in dem die eingeleitete Luft 19 verwirbelt wird. Sie strömt nun zumindest teilweise durch nicht in den Ringspalt 18 mündende Kanäle 20 aus. Somit wird eine Verunreinigung der Kanäle 20 verhindert. Zusätzlich strömt der Luftstrom 19 zumindest teilweise durch die Aufweitungen 26 und sorgt somit für eine ausreichende Luftkühlung des Adapters 29. Die Kanäle 20 sind in einer Ebene 22 angeordnet, welche nicht durch den Mittelpunkt 21 angeordnet ist. Auf diese Weise münden nur eine geringe Anzahl der Kanäle 20 in die Umgebung außerhalb der Wärmeanlage, wodurch ein geringerer Luftstrom 19 zur Kühlung bzw. Dichtung benötigt wird.

Das erfindungsgemäße Lagersystem mit einem Kugelgelenk ermöglicht eine einfache Montage des Lagersystems, wobei die Ausgestaltung der Anlageflächen die Reibung während des Betriebes des Lagersystems reduziert. Bei einer entsprechenden Versorgung des Lagersystems mit einem Luftstrom, kann dieses beispielsweise gegen Asche- und Rußpartikel abgedichtet werden.

### Bezugszeichenliste

- 1: Kugelgelenk
- 2: Kugel
- 3: Oberfläche
- 4: Durchmesser
- 5: Durchgang
- 6: Wasserlanze
- 7: Achse
- 8: Kugelsitz
- 9a, 9b: Lagerschale
- 10a, 10b: Öffnung
- 11: Fläche
- 12a, 12b: Auflagefläche
- 13a, 13b: maximaler Schalendurchmesser
- 14a, 14b: minimaler Schalendurchmesser
- 15: Federelement
- 16: Halterung
- 17: Teilfläche
- 18: Ringspalt
- 19: Luftstrom (Pfeile)
- 20: Kanal
- 21: Mittelpunkt
- 22: Ebene
- 23: Querschnittserweiterung
- 24: Ventil
- 25: Austrittsöffnung
- 26: Aufweitung
- 27: Eintrittsöffnung
- 28: Aussparung
- 29: Adapter
- 30: Verschwenkbereich
- 31: Spalt
- 32: Druck
- 33: Umgebungsdruck
- 34: Kanalöffnung
- 35: Wasserlanzenbläser
- 36: Antriebseinheit
- 37: Luke
- 38: Ende
- 39: Tiefe
- 40: Länge

## Patentansprüche

1. Lagersystem für eine Wasserlanze (6) eines Wasserlanzenbläsers mit einem Kugelgelenk (1) umfassend eine Kugel (2) mit einer Oberfläche (3) und einem Durchmesser (4) sowie einen Kugelsitz (8), wobei die Kugel (2) einen Durchgang (5) hat, an und/oder in dem eine Mündung der Wasserlanze (6) fixierbar ist **dadurch gekennzeichnet, daß** der Kugelsitz (8) zwei voneinander axial (7) beabstandete Lagerschalen (9a, 9b) mit je einer Öffnung (10a, 10b) umfaßt, wobei die Kugel (2) zumindest teilweise in die Öffnungen (10a, 10b) hineinragt, und wobei mit den Lagerschalen (9a, 9b) ein um die Kugel (2) umlaufender Ringspalt (18) begrenzt ist, in den ein Luftstrom (19) einleitbar ist.

2. Lagersystem nach Anspruch 1, **dadurch gekennzeichnet, daß** die Kugel (2) mindestens einen, vorzugsweise radial verlaufenden, Kanal (20) aufweist, der sich von der Oberfläche (3) zu dem Durchgang (5) hin erstreckt.

3. Lagersystem nach Anspruch 2, **dadurch gekennzeichnet, daß** die Kanäle (20) in einer gemeinsamen Ebene (22) angeordnet sind.

4. Lagersystem nach Anspruch 2 oder 3, **dadurch gekennzeichnet, daß** der Durchgang (5) mindestens eine Querschnittserweiterung (23) mit einer vorgebbaren Länge (40) aufweist, wobei diese mit mindestens einem Kanal (20), vorzugsweise allen Kanälen (20), verbunden ist.

5. Lagersystem nach einem der Ansprüche 2 bis 4, **dadurch gekennzeich-net, daß** der mindestens eine Kanal (20) ein Ventil (24) aufweist.

6. Lagersystem nach einem der Ansprüche 2 bis 5, wobei der Durchgang (5) eine Austrittsöffnung (25) hat, **dadurch gekennzeichnet, daß** der Durchgang (5) mindestens eine Aufweitung (26) aufweist, die an die Austrittsöffnung (25) grenzt und eine vorgebbare Tiefe (39) hat, wobei die Aufweitung (26) strömungstechnisch mit dem mindestens einen Kanal (20) verbunden ist.

7. Lagersystem nach einem der Ansprüche 1 bis 6, **dadurch gekennzeichnet, daß** die Lagerschalen (9a, 9b) je eine sphärische Anlagefläche (12a, 12b) mit emsn maximalen (13a, 13b) und einem minimalen Schalendurchmesser (14a, 14b) anfweisen, welche zumindest teilweise an der Oberfläche (3) anliegen.

8. Lagersystem nach einem der Ansprüche 1 bis 7, **dadurch gekennzeichnet, daß** die Lagerschalen (9a, 9b) miteinander verbunden sind.

9. Lagersystem Anspruch 8, **dadurch gekennzeichnet, daß** wenigstens eine Lagerschale (9a, 9b) mit mindestens einem Federelement (15) so verbunden ist, daß dieses mindestens eine Lagetschale (9a, 9b) an die Kugel (2) drückt.

10. Lagersystem nach einem der Ansprüche 1 bis 9, **dadurch gekennzeichnet, daß** mindestens eine Lagerschale (9a, 9b) mit einer Halterung (16), insbesondere aus hitzebeständigem Material verbunden ist.

11. Lagersystem nach einem der Ansprüche 1 bis 10, **dadurch gekennzeichnet, daß** die Kugel (2) einen Durchmesser (4) von 110 mm bis 200 mm, insbesondere von 130 mm bis 160 mm, hat.

12. Lagersystem nach einem der Ansprüche 1 bis 11, **dadurch gekennzeichnet, daß** zumindest eine Teilfläche (17) der Oberfläche (3) der Kugel (2) aus einem keramischen Material, insbesondere Aluminiumoxid, gebildet ist.

13. Lagersystem nach Anspruch 12, **dadurch gekennzeichnet, daß** die Kugel (2) aus keramischen Material, insbesondere aus Keramik-Spritzguß, gebildet ist.

14. Lagersystem nach einem der Ansprüche 1 bis 13, wobei der Durchgang (5) eine Eintrittsöffnung (27) hat, **dadurch gekennzeichnet, daß** der Durch-gang (5) nahe der Eintrittsöffnung (27) mindestens eine Anssparung (28) aufweist.

15. Lagersystem nach einem der Ansprüche 1 bis 14, wobei der Durchgang (5) eine Eintrittsöffnung (27) hat, **dadurch gekennzeichnet, daß** in und/oder an dem Durchgang (5), insbesondere nahe der Eintrittsöffnung (27), ein Adapter (29) zur Fixierung einer Wasserlanze (6) angeordnet ist.

16. Lagersystem nach einem der Ansprüche 1 bis 15, **dadurch gekennzeichnet, daß** der Durchgang (5) mindestens einen Verschwenkbereich (30) von 45° um die Achse (7) des Kugelgelenkes (1) aufweist.

17. Verfahren zum Betrieb eines Lagersystem nach einem der Ansprüche 1 bis 16, wobei in dem Ringspalt (18) ein gasförmiges Medium, vorzugsweise ein Luftstrom (19), bereitgestellt wird, dessen Druck (32) größer als der Umgebungsdruck (33) des Kugelgelenkes (1) ist.

18. Verfahren nach Anspruch 17, wobei die Kugel (2) mehrere radial verlaufende Kanäle (20) hat, bei dem zumindest während einer axialen (7) Ausrichtung des Durchganges (5), insbesondere innerhalb eines Verschwenkbereiches (30) von 20°, alle Kanalöffnungen (34) in den Ringspalt (18) münden.

19. Verfahren nach Anspruch 17 oder 18, wobei die Kugel (2) mehrere radial verlaufende Kanäle (20) hat, bei dem bei beliebiger Ausrichtung des Durchganges (5) mindestens eine Kanalöffnungen (34) wenigstens teilweise in den Ringspalt (18) mündet.

20. Verfahren nach einem der Ansprüche 17 bis 19, wobei die Kugel (2) mehrere radial verlaufende Kanäle (20), einen ringförmigen Hohlraum (23) und mindestens eine Aufweitung (26) hat, bei dem der Luftstrom (19). durch zumindest eine im Ringspalt (18) angeordneten Kanalöffnung (34) in die Querschnittserweiterung (23) strömt und zumindest teilweise durch nicht in den Ringspalt (18) mündende Kanäle (20) und/oder die mindestens eine Anfweitung (26) austritt.

## Claims

1. Bearing system for a water lance (6) of a water lance blower with a ball joint (1) comprising a ball (2) having a surface (3) and a diameter (4), and a ball seat (8), wherein the ball (2) has a through-passage (5) at and/or in which a mouth of the water lance (6) is fixable, **characterized in that** the ball seat (8) comprises two bearing shells (9a, 9b) spaced apart axially (17) from one another and each having an opening (10a, 10b), wherein the ball (2) projects at least in part into the openings (10a, 10a) and wherein the bearing shells (9a, 9b) bound an annular gap (18) which encircles said ball (2) and into which an air stream (19) can be introduced.

2. Bearing system according to claim 1, **characterized in that** the ball (2) has at least one, preferably radially running, channel (20), which extends from the surface (3) in a direction to the through-passage (5).

3. Bearing system according to claim 2, **characterized in that** the channels (20) are disposed in a common plane (22).

4. Bearing system according to claim 2 or 3, **characterized in that** the through-passage (5) comprises at least one cross-sectional widening (23) with a predeterminable length (40), wherein said cross-sectional widening (23) is connected to the at least one of the channel (20), preferably to all channels (20).

5. Bearing system according to one of claims 2 to 4, **characterized in that** the at least one channel (20) comprises a valve (24).

6. Bearing system according to one of claims 2 to 5, wherein the through-passage (5) has an outlet opening (25), **characterized in that** the through-passage (5) comprises at least one widened portion (26) adjacent to the outlet opening (25) and having a predeterminable depth (39), wherein the widened portion (26) is connected in terms of flow to the at least one channel (20).

7. Bearing system according to one of claims 1 to 6, **characterized in that** the bearing shells (9a, 9b) each have a spherical abutment surface (12a, 12b) with a maximum (13a, 13b) and a minimum shell diameter (14a, 14b), the spherical abutment surface butting at least in part against the surface (3).

8. Bearing system according to one of claims 1 to 7, **characterized in that** the bearing shells (9a, 9b) are connected to one another.

9. Bearing system according to claim 8, **characterized in that** at least one of the bearing shells (9a, 9b) being connected to at least one spring element (15) such that said spring element pushes at least one bearing shell (9a, 9b) onto the ball (2).

10. Bearing system according to one of claims 1 to 9, **characterized in that** at least one bearing shell (9a, 9b) is connected to a mounting (16), wherein the mounting preferably comprises heat resistant material.

11. Bearing system according to one of claims 1 to 10, **characterized in that** the diameter (4) of the ball (2) is from 110 mm to 200 mm, in particular from 130 mm to 160 mm.

12. Bearing system according to one of claims 1 to 11, **characterized in that** at least a surface portion (17) of the surface (3) of the ball (2) is formed from a ceramic material, in particular alumina.

13. Bearing system according to claim 12, **characterized in that** the ball (2) is formed from a ceramic material, in particular by ceramic injection molding.

14. Bearing system according to one of claims 1 to 13, wherein the through-passage (5) has an inlet opening (27), **characterized in that** the through-passage (5) comprises at least one cut-out (28) in the vicinity of the inlet opening (27).

15. Bearing system according to one of claims 1 to 14, wherein the through-passage (5) has an inlet opening (27), **characterized in that** an adapter (29) for securing the water lance (6) is disposed in and/or on the through-passage (5), in particular in the vicinity of the inlet opening (27).

16. Bearing system according to one of claims 1 to 15, **characterized in that** the through-passage (5) has a pivoting range (30) of at least 45° about the axis (7) of the ball joint (1).

17. Method for operating a bearing system according to one of claims 1 to 16, wherein a gaseous medium, preferably an air stream (19), is provided in the annular gap (18), the pressure (32) of which is greater than the ambient pressure (33) around the ball joint (1).

18. Method according to claim 17, wherein the ball (2) comprises several radially running channels (20), wherein at least during an axial (7) orientation of the through-passage (5), in particular within the pivoting range (30) of 20°, all channel openings (34) open out into the annular gap (18).

19. Method according to claim 17 or 18, wherein the ball (2) comprises several radially running channels (20), and wherein in any desired orientation of the through-passage (5) at least one channel opening (34) opens out into the annular gap (18).

20. Method according to one of claims 17 to 19, wherein the ball (2) comprises several radially running channels (20), an angular cavity (23) and at least one widened portion (26), wherein the air stream (19) flows through at least one channel opening (34) being arranged in the annular gap (18) into the cross-sectional widening (23) and passes out, at least in part, through channels (20) which do not open out into the annular gap (18) and/or into the at least one widened portion (26).

## Revendications

1. Système de palier pour une lance à eau (6) d'un souffleur de lance à eau avec un joint sphérique (1) comprenant une boule (2) avec une surface (3) et un diamètre (4) ainsi qu'un logement de boule (8), la boule (2) ayant un passage (5) auquel et/ou dans lequel un orifice de la lance à eau (6) est fixable, **caractérisé en ce que** le logement de boule (8) comprend deux coquilles de palier (9a, 9b) axialement(7) à distance l'une de l'autre et ayant chacune une ouverture (10a, 10b), dans quel cas la boule (2) s'étend au moins partiellement dans les ouvertures (10a, 10b), et dans quel cas une fente annulaire (18) s'étendant autour de la boule (2) est limitée avec les coquilles de palier (9a, 9b), fente annulaire, dans laquelle un flux d'air (19) peut être introduit.

2. Système de palier selon la revendication 1, **caractérisé en ce que** la boule (2) a au moins un canal (20) qui s'étire de préférence radialement et qui s'étend depuis la surface (3) jusqu'au passage (5).

3. Système de palier selon la revendication 2, **caractérisé en ce que** les canaux (20) sont agencés dans un plan (22) commun.

4. Système de palier selon la revendication 2 ou 3, **caractérisé en ce que** le passage (5) a au moins un élargissement de section transversale (23) avec une longueur (40) pouvant être prédéterminée, celui-ci étant relié à au moins un canal (20), de préférence à tous les canaux (20).

5. Système de palier selon l'une des revendications 2 à 4, **caractérisé en ce que** l'au moins un canal (20) présente une valve (24).

6. Système de palier selon l'une des revendications 2 à 5, dans quel cas le passage (5) a un orifice de sortie (25), **caractérisé en ce que** le passage (5) a au moins une dilatation (26), qui voisine avec l'orifice de sortie (25) et qui a une profondeur (39) pouvant être prédéterminée, la dilatation (26) étant reliée par connexion de flux à l'au moins un canal (20).

7. Système de palier selon l'une des revendications 1 à 6, **caractérisé en ce que** les coquilles de palier (9a, 9b) ont chacune une surface d'application (12a, 12b) sphérique avec un diamètre de coquille maximal (13a, 13b) et un diamètre de coquille minimal (14a, 14b), qui s'appliquent au moins partiellement contre la surface (3).

8. Système de palier selon l'une des revendications 1 à 7, **caractérisé en ce que** les coquilles de palier (9a, 9b) sont reliées l'une à l'autre.

9. Système de palier selon la revendication 8, **caractérisé en ce qu'**au moins une coquille de palier (9a, 9b) est reliée de manière telle à au moins un élément de ressort (15) que celui-ci presse au moins une coquille de palier (9a, 9b) contre la boule (2).

10. Système de palier selon l'une des revendications 1 à 9, **caractérisé en ce qu'**au moins une coquille de palier (9a, 9b) est reliée à une retenue (16), notamment en matériau résistant à la chaleur.

11. Système de palier selon l'une des revendications 1 à 10, **caractérisé en ce que** la boule (2) a un diamètre (4) de 110 mm à 200 mm, notamment de 130 mm à 160 mm.

12. Système de palier selon l'une des revendications 1 à 11, **caractérisé en ce qu'**au moins une aire partielle (17) de la surface (3) de la boule (2) est formée d'un matériau céramique, notamment d'oxyde d'aluminium.

13. Système de palier selon la revendication 12, **caractérisé en ce que** la boule (2) est formée de matériau céramique, notamment par moulage de céramique par injection.

14. Système de palier selon l'une des revendications 1 à 13, dans quel cas le passage (5) a un orifice d'entrée(27), **caractérisé en ce que** le passage (5) a au moins un évidement (28) à proximité de l'orifice d'entrée (27).

15. Système de palier selon l'une des revendications 1 à 14, le passage (5) ayant un orifice d'entrée (27), **caractérisé en ce qu'**un adaptateur (29) pour fixer une lance à eau (6) est agencé dans et/ou au niveau du passage (5), notamment à proximité de l'orifice d'entrée (27).

16. Système de palier selon l'une des revendications 1 à 15, **caractérisé en ce que** le passage (5) a au moins une région de pivotement (30) de 45° autour de l'axe (7) du joint sphérique (1).

17. Procédé destiné à l'opération d'un système de palier selon l'une des revendications 1 à 16, dans quel cas un médium gazéiforme, de préférence un flux d'air (19) est mis à disposition dans la fente annulaire (18), flux d'air dont la pression (32) est plus élevée que la pression ambiante (33) du joint sphérique (1).

18. Procédé selon la revendication 17, la boule (2) ayant plusieurs canaux (20) s'étendant radialement, dans le cas duquel au moins durant un alignement axial (7) du passage (5), notamment à l'intérieur d'une région de pivotement (30) de 20°, toutes le ouvertures (34) débouchent dans la fente annulaire (18).

19. Procédé selon la revendication 17 ou 18, la boule (2) présentant plusieurs canaux (20) qui s'étendent de manière radiale, procédé dans lequel lors d'un alignement quelconque du passage (5) au moins une ouverture de canal (34) débouche au moins partiellement dans la fente annulaire (18).

20. Procédé selon l'une des revendications 17 à 19, dans quel cas la boule (2) a plusieurs canaux (20) s'étendant de manière radiale, une cavité annulaire (23) et au moins un évasement (26), dans le cas duquel le flux d'air (19) s'écoule à travers au moins une ouverture de canal (34) dans l'élargissement de la section transversale (23), ouverture de canal agencée dans la fente annulaire (18) et sort au moins partiellement par des canaux (20) qui ne débouchent pas dans la fente annulaire (18) et/ou par l'au moins un évasement (26).
